Europäisches Patentamt

European Patent Office

Office européen des brevets

(11) Veröffentlichungsnummer: **0 294 585**
**B1**

(12) **EUROPÄISCHE PATENTSCHRIFT**

(45) Veröffentlichungstag der Patentschrift:
26.09.90

(51) Int. Cl.⁵: **B62D 33/06**

(21) Anmeldenummer: **88107150.0**

(22) Anmeldetag: **04.05.88**

(54) LKW-Fahrerhaus mit klappbaren Schlafliegen.

(30) Priorität: **12.06.87 DE 3719611**

(43) Veröffentlichungstag der Anmeldung:
**14.12.88 Patentblatt 88/50**

(45) Bekanntmachung des Hinweises auf die Patenterteilung:
**26.09.90 Patentblatt 90/39**

(84) Benannte Vertragsstaaten:
**DE IT NL SE**

(56) Entgegenhaltungen:
**DE-A- 1 580 388**
**DE-A- 2 344 439**
**DE-A- 2 653 780**
**FR-A- 2 169 608**
**US-A- 3 353 861**

(73) Patentinhaber: **MAN Nutzfahrzeuge Aktiengesellschaft,
Dachauer Strasse 667 Postfach 50 06 20,
D-8000 München 50(DE)**

(72) Erfinder: **Boamban, Gerlinde, Frauenwörther Strasse 6,
D-8000 München 19(DE)**

ACTORUM AG

## Beschreibung

Die Erfindung betrifft ein Lkw-Fahrerhaus mit klappbaren Schlafliegen.

Solche Fahrerhäuser sind allgemein bekannt (z.B. US-A 3 353 861. Bei Fahrbetrieb mit Fahrer und Beifahrer nimmt man zunehmend von einer wechselnden Benutzung der Liegen wegen des damit verbundenen Umräumens der Schlafutensilien Abstand, d.h., wenn z.B. dem Beifahrer die obere Schlafliege zugeordnet ist und dieser schlafen will, während sein Kollege fährt, dann tritt die Situation ein, daß die obere Schlafliege benutzt und der Fahrersitz besetzt ist. In diesem Zustand schränkt die in Benutzerposition heruntergeklappte Liege den Sitz-Rücklehnenverstellbereich ein, wodurch wiederum der Abstand Lenkrad/Pedale zu Fahrersitz-Rückenlehne auf ein Maß eingegrenzt wird, das, insbesondere bei großgewachsenen Fahrern, zu einer unbequemen Sitzhaltung führt.

Der Erfindung liegt nun die Aufgabe zugrunde, auch im Benutzungszustand der oberen Schlafliege einen für alle Fahrer ausreichend einstellbaren Abstand von Fahrersitz-Rückenlehne zu Lenkrad/Pedale zu schaffen.

Dies wird erfindungsgemäß dadurch erreicht, daß die obere, in Kopfhöhe des Fahrers angeordnete Schlafliege im Bereich des Fahrersitzes eine Aussparung aufweist, die durch ein mit dem oberen Rand der Rückenlehne oder mit dem Rand der Aussparung verbundenes Komplementärteil bedarfsweise ergänzbar ist. Solcherart wird einerseits eine optimale Ausnutzung der Sitz-Rückenlehnenverstellung erzielt, d.h., bei gegebenen Fahrerhaus-Innenmaßen wird der Sitzverstellbereich um die Breite des Komplementärteils vergrößert, andererseits aber erhält die obere Schlafliege durch Einrücken des Komplementärteils mindestens bei Stand des Fahrzeuges wieder ihre volle Breite, nämlich dann, wenn beide Fahrer schlafen wollen.

Nach einem Merkmal der Erfindung ist das Komplementärteil die Kopfstütze an der Rückenlehne des Fahrersitzes oder ein ähnlich aufsteckbares Einsatzteil. Dies ist die billigste Lösung, die gegebenenfalls ohne Nachrüstaufwand zu realisieren ist.

Nach einem anderen Merkmal der Erfindung ist das Komplementärteil am oberen Rand der Rückenlehne scharnierartig angebracht und bedarfsweise nach oben oder unten in entsprechende Verriegelungsstellungen klappbar. Mit einem von der Kopfstütze unabhängigen Komplementärteil muß die Kopfstütze nicht jedesmal auf die Benutzungshöhe der oberen Schlafliege abgestimmt werden.

Nach einer weiteren Variante ist das Komplementärteil am Rand der Aussparung der oberen Schlafliege scharnierartig angebracht und bedarfsweise nach unten oder parallel zur Schlafliege in entsprechenden Verriegelungsstellungen klappbar. Solcherart wird unter Beibehaltung aller erfinderischen Vorteile eine Unabhängigkeit von der Gestaltung des Fahrersitzes erzielt, so daß dieses Serienzulieferteil nicht kostensteigernd und lagerhaltungserschwerend in mehreren Ausführungsformen geliefert oder gelagert werden muß.

Weitere Vorteile und Merkmale der Erfindung sind den Ansprüchen, der Beschreibung und den Zeichnungen zu entnehmen.

Die Erfindung ist in einem Ausführungsbeispiel dargestellt.

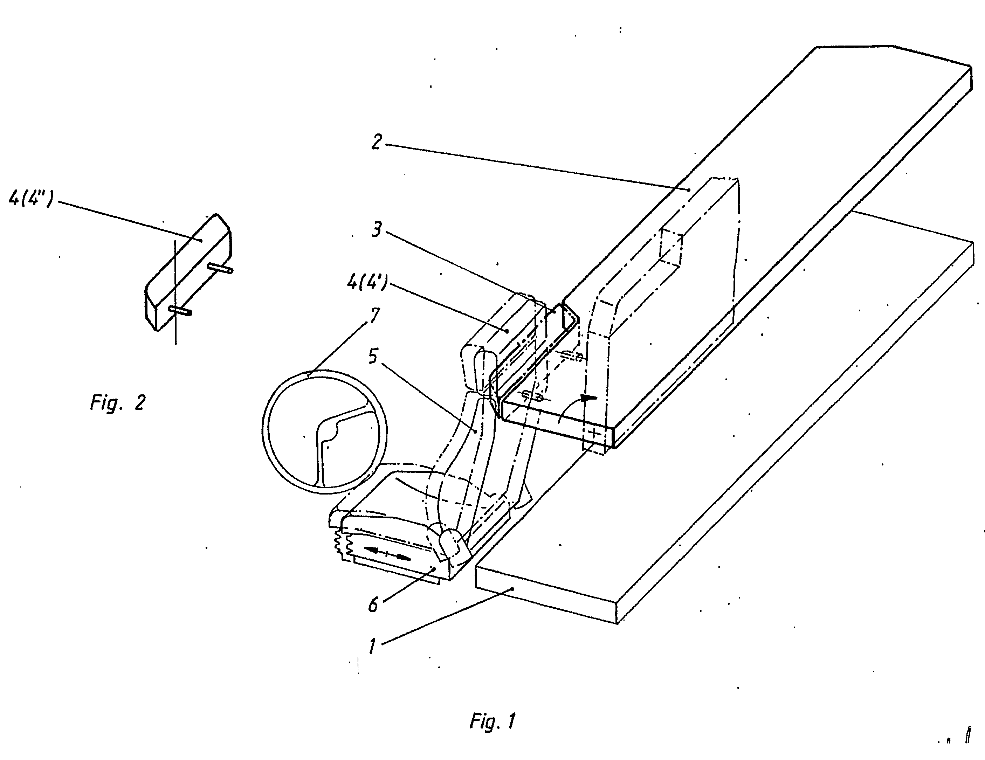

Es zeigen Fig. 1 die bereichsweise Innenausstattung eines Lkw-Fahrerhauses,
Fig. 2 ein Einsatzteil.

Die Figur 1 der Zeichnung zeigt die bereichsweise Innenausstattung eines Lkw-Fahrerhauses mit darin klappbar angeordneten Schlafliegen 1 und 2. Die obere Schlafliege 2 weist eine Aussparung 3 auf, in die als Komplementärteil 4 die aufsteckbar mit der Rückenlehne 5 des Fahrersitzes 6 verbundene Kopfstütze 4' oder ein nach Figur 2 wahlweise gegen die Kopfstütze 4' austauschbares Einsatzteil 4" einrückbar ist. Im eingerückten Zustand ist das Komplementärteil 4 strichliniert in der Aussparung 3 dargestellt. Als ortsfester Bezugspunkt für die Verstellung des Fahrersitzes 6 ist das Lenkrad 7 eingezeichnet. Wenn im Stand des Fahrzeuges beide Schlafliegen benutzt werden sollen, kann die Kopfstütze 4', sofern sie nicht schon als Komplementärteil ausgebildet ist, gegen das Einsatzteil 4" ausgetauscht werden. Solcherart erhält die obere Schlafliege 2 wieder ihre normale rechteckige Abmessung. Nach einer Variante der Erfindung kann das Komplementärteil 4 auch scharnierartig am oberen Rand der Rückenlehne angebracht sein und in eine untere oder obere Verriegelungsstellung gebracht werden. Eine weitere Variante ermöglicht die Anbringung des Komplementärteils 4 am Rand der Einsparung 3, wobei das Komplementärteil 4 in Verriegelungsstellungen unterhalb der Schlafliege und parallel zur Schlafliege anbringbar ist.

## Patentansprüche

1. Lkw-Fahrerhaus mit klappbaren Schlafliegen, dadurch gekennzeichnet, daß die obere, in Kopfhöhe des Fahrers angeordnete Schlafliege im Bereich des Fahrersitzes (6) eine Aussparung (3) aufweist, die durch ein mit dem oberen Rand der Rückenlehne (5) oder mit dem Rand der Aussparung (3) verbundenes Komplementärteil (4) bedarfsweise ergänzbar ist.

2. Lkw-Fahrerhaus nach Anspruch 1, dadurch gekennzeichnet, daß das Komplementärteil (4) die Kopfstütze (4') an der Rückenlehne (5) des Fahrersitzes (6) oder ein ähnlich aufsteckbares Einsatzteil (4") ist.

3. Lkw-Fahrerhaus nach Anspruch 1, dadurch gekennzeichnet, daß das Komplementärteil (4) am oberen Rand der Rückenlehne (5) scharnierartig angebracht und bedarfsweise nach oben oder unten in entsprechende Verriegelungsstellungen klappbar ist.

4. Lkw-Fahrerhaus nach Anspruch 1, dadurch gekennzeichnet, daß das Komplementärteil (4) am Rand der Aussparung (3) der oberen Schlafliege (2) scharnierartig angebracht ist und bedarfsweise nach unten oder parallel zur Schlafliege (2) in entsprechenden Verriegelungsstellungen klappbar ist.

5. Lkw-Fahrerhaus nach einem oder mehreren der Ansprüche 1 bis 4, dadurch gekennzeichnet, daß das Komplementärteil (4) gepolstert ist.

## Claims

1. Truck cab with folding bunks characterised by the fact that the upper bunk located at the level of the driver's head has a recess (3) in the area of the driver's seat (6) which recess can if necessary be filled in by a complementary part (4) connected either to the upper edge of the seat back (5) or to the edge of the recess (3).

2. Truck cab as under Claim 1, characterised by the fact that the complementary part (4) is the headrest (4') on the seat back (5) of the driver's seat (6) or a part (4") which can be slotted in in a similar manner.

3. Truck cab as under Claim 1, characterised by the fact that the complementary part (4) is attached as by a hinge to the upper edge of the seat back (5) and can if required be folded upwards or downwards to appropriate locked positions.

4. Truck cab as under Claim 1, characterised by the fact that the complementary part (4) is attached as by a hinge to the edge of the recess (3) in the upper bunk (2) and can· if required be folded downwards or parallel to the bunk (2) to appropriate locked positions.

5. Truck cab as under one or more of Claims 1 to 4, characterisd by the fact that the complementary part (4) is upholstered.

## Revendications

1. Cabine de camion avec couchettes rabattables, caractérisée par le fait que la couchette supérieure disposée à la hauteur de la tête du conducteur présente un évidement (3) dans la plage du siège du conducteur (6) pouvant être complété au besoin par un élément complémentaire (4) relié soit au rebord supérieur du dossier de siège (5) soit au rebord de l'évidement (3).

2. Cabine de camion selon la revendication 1, caractérisée par le fait que l'élément complémentaire (4) est l'appui-tête (4') sur te dossier (5) du siège du conducteur (6) ou un élément similairement enfichable (4").

3. Cabine de camion selon la revendication 1, caractérisée par le fait que l'élément complémentaire (4) est disposé à la manière d'une charnière sur le rebord supérieur du dossier de siège (5) et peut au besoin être relevé ou rabattu dans des positions de verrouillage correspondantes.

4. Cabine de camion selon la revendication 1, caractérisée par le fait que l'élément complémentaire (4) sur le rebord de l'évidement (3) de la couchette supérieure (2) est disposé à la manière d'une charnière et peut au besoin être rabattu vers le bas ou parallèlement à la couchette (2) dans des positions de verrouillage correspondantes.

5. Cabine de camion selon l'une ou plusieurs des revendications 1 à 4, caractérisée par le fait que l'élément complémentaire (4) est rembourré.

4(4")

Fig. 2

2

3

4(4')

7

5

6

1

Fig. 1

EP 0 294 585 B1